# NEUE EUROPÄISCHE PATENTSCHRIFT

(11) **EP 1 375 088 B2**
(45) Veröffentlichungstag und Bekanntmachung des Hinweises auf die Entscheidung über den Einspruch: **02.05.2018**
(45) Hinweis auf die Patenterteilung: 28.02.2007
(21) Anmeldenummer: 03013184.1
(22) Anmeldetag: 12.06.2003
(51) Int. Cl.: B25J 21/00, B25J 19/06

(54) **Roboteranlage mit einem Roboter mit einer Schutzvorrichtung**
Robot installation with a robot with a protection device
Installation robotisée comprenant un robot avec un dispositif de protection

(30) Priorität: 21.06.2002 DE 20209680 U; 11.10.2002 DE 20215648 U
(43) Veröffentlichungstag der Anmeldung: 02.01.2004
(73) Patentinhaber: ABB Automation GmbH, 68309 Mannheim (DE)
(72) Erfinder: Diedrich, Franz, 61231 Bad Nauheim (DE)
(74) Vertreter: Wesch, Arno

(56) Entgegenhaltungen:
- EP-A- 0 361 178
- DE-A- 3 532 305
- DE-U- 20 101 442

## Beschreibung

Die Erfindung betrifft eine Roboteranlage mit einem Roboter mit einer Schutzvorrichtung nach dem Oberbegriff des Anspruches 1.

Eine solche Roboteranlage kann zwei Stationen besitzen, von den in einem Fall die eine Bestückungsstation, deren Tisch von einer Bedienperson bestückt wird, und die andere eine Bearbeitungsstation ist, in der ein Werkstück von einem Roboter bearbeitet wird. Nach Fertigstellung der Bearbeitung verschwenkt sich der Roboter um seine Achse, so dass die Station, in der vorher bestückt wurde, jetzt die Bearbeitungsstation ist. Die Station, in der vorher der Roboter ein Werkstück bearbeitet hat, ist nunmehr die Bestückungsstation, usw. Anstatt nur zwei Stationen können auch mehr als zwei Stationen vorgesehen sein.

Die Stationen nehmen den Roboter zwischen sich und der Roboter bearbeitet das Werkstück zunächst in der einen und dann in der anderen Station usw.

Zum Schutz des Bedienpersonales ist die Roboteranlage von einem Schutzgerüst oder von Schutzwänden umgeben; derartige Schutzgerüste oder -wände sind aufwendig herzustellen.

So ist aus der Deutschen Offenlegungsschrift DE 35 32 305 A1 eine Montagezelle für Werkstücke bekannt, bei der zwischen zwei Grundtischen ein Roboter angeordnet ist.

Die Grundtische sind einem Arbeitsbereich und einem Bedienbereich zugeordnet, die durch einen Blendschutz, nämlich fest installierte Wände, voneinander getrennt sind. Ist die Bearbeitung eines Werkstückes erfolgt, werden die Grundtische so verschwenkt, dass sie ihre Positionen tauschen und ein neues Werkstück in den Arbeitsbereich des Roboters gelangt.

Aufgabe der Erfindung ist es, eine Roboteranlage einfacher auszuführen, wobei ein optimaler Schutz des Bedienungspersonals gewährleistet sein soll.

Diese Aufgabe wird erfindungsgemäss durch die Merkmale des Anspruches 1 gelöst.

Der besondere Vorteil der Erfindung besteht darin, dass die Stationen so dem Roboter zugeordnet sind, dass der Roboter an jeder Station arbeiten kann. Bei zwei Stationen können diese nebeneinander angeordnet sein. Der Roboter befindet sich in einem Bereich, der durch eine Schutzwandung umgrenzt ist, wobei die Schutzwandung einen offenen Bereich aufweist, durch den der Roboterarm herausführbar ist. Der Innendurchmesser der Schutzwandung ist so bemessen, dass der Roboter vollständig in den Bereich des Innenraumes der Schutzwandung einfahrbar ist. Diese Ausgestaltung ist insbesondere dann von besonderem Vorteil, wenn in dem Arbeitsraum des Roboters Schweissvorgänge insbesondere mit Laserstrahlen erfolgen; durch die zylinderförmige Schutzwandung werden Auswirkungen von der einen Station, in dem der Roboter arbeitet, auf die andere, an der die Bedienungsperson arbeitet, und auf die Bedienperson selbst, vermieden.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen die Erfindung so wie weitere vorteilhafte Ausgestaltungen und Verbesserungen näher erläutert werden.

Es zeigen:
Fig. 1 eine Seitenansicht einer Roboteranlage und
Fig. 2 eine Aufsicht auf die Roboteranlage.

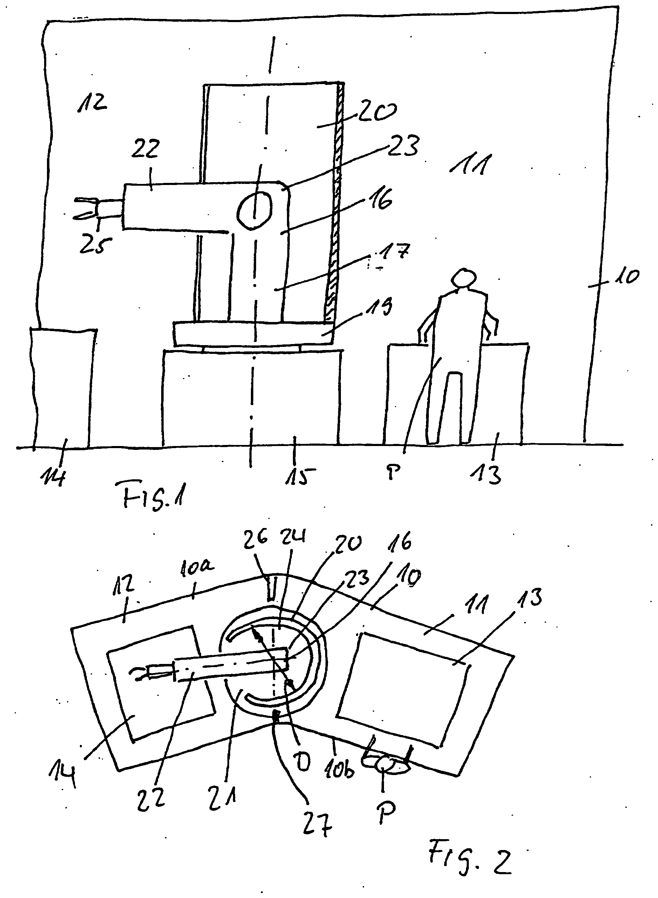

Es sei nun Bezug genommen auf die Fig. 2.

In einem Zellengehäuse 10 sind zwei Stationen mit je einem Arbeitsraum 11 und 12 vorhanden, von denen der Arbeitsraum 11 einen ersten Tisch 13 oder Positionierer und der Arbeitsraum 12 einen zweiten Tisch 14 oder Positionierer aufweist. Das Zellengehäuse 10 ist so ausgebildet, dass beide Arbeitsräume 11 und 12 in einem stumpfen Winkel einander zugeordnet sind und direkt aneinander anschliessen. Selbstverständlich können beide auch im Winkel von 180° oder in einem Winkel, der kleiner als 180° ist, einander zugeordnet sein.

Es sei nun Bezug genommen auf die Fig. 1.

Innerhalb des Zeilengehäuses 10 ist in diesem gezeichneten Zustand der Arbeitsraum 11 der Bestückungsraum und der Arbeitsraum 12 der Roboterarbeitsraum, mit dem ersten Tisch 13, der hier als Bestückungstisch dient, und dem zweiten Tisch 14, der als Bearbeitungstisch dient. Mittig zwischen diesen beiden Arbeitsräumen 11 und 12 befindet sich ein Podest 15, auf dem ein Roboter 16, der mit seiner Basis 17 um eine vertikale Achse 18 drehbar ist, angeordnet ist.

An der Basis 17 (auch Roboterfuss genannt), die um die vertikale Achse 18 drehbar ist, ist ein Arm 22 gelenkig angeordnet, an dessen freiem Ende eine Bearbeitungsvorrichtung 25 angeordnet ist, mit der Werkstücke bearbeitet werden können. Diese Bearbeitungsvorrichtung kann beispielsweise eine Greifvorrichtung oder darüber hinaus auch eine Schweissvorrichtung sein.

Die Zuordnung der beiden Arbeitsräume ist nun so, dass eine Bedienperson P am ersten Arbeitsraum 11 tätig ist, um den ersten Tisch 13 mit Werkstücken oder Werkstückteilen zu bestücken. Zu dieser Zeit ragt der Roboterarm 22 in den zweiten Arbeitsraum 12, um dort auf dem zweiten Tisch 14 angebrachte Werkstücke oder Werkstückteile zu bearbeiten, z. B. solche Werkstückteile miteinander zu verschweissen.

Sobald die Bedienungsperson den ersten Tisch 13 fertig bestückt und der Roboter 16 seine Arbeit im zweiten Raum 12 beendet haben, schwenkt der Roboter 16 um seine vertikale Achse 18, damit sein Arm 22 in den ersten Raum 11 gelangt. Die Bedienperson P entfernt das oder die bearbeiteten Werkstücke aus dem zweiten Arbeitsraum und bestückt den zweiten Tisch 14 mit neuem zu bearbeitenden Werkstücken oder Werkstückteilen.

Die Basis 17 des Roboters 16 ist auf einer sich ebenfalls drehbaren Tragplatte 19 befestigt, so dass bei Drehung der Tragplatte 19 die Basis 17 und damit der Roboter 16 sich mitdrehen.

Auf der Tragplatte 19 ist eine zylinderförmige Schutzwand 20 aufgebracht, die einen axial an der Schutzwand 20 verlaufenden, offenen Bereich 21 umfasst, aus dem heraus der Arm des Roboters 23 herausragt.

Der Durchmesser D des Innenraums 24 der zylinderförmigen Schutzwand 20 ist so bemessen, dass dann, wenn der Roboter 16 in eine Ruhestellung verfahren wird, sich alle Teile insbesondere auch der Arm 22 mit einer Bearbeitungsvorrichtung 25 innerhalb des Zylinderbereiches der Schutzwand 20 befinden, wobei es durchaus möglich ist, dass der Roboter nach oben über die Schutzwand 20 hinausragt.

Wenn nun der Roboter 16 seine Arbeit im Arbeitsraum 12, d. h. im zweiten Arbeitsraum 12, beendet hat, klappt der Roboter 16 ins Innere der zylinderförmigen Schutzwand 20, d. h. in den durch die Schutzwand 20 umgrenzten zylindrischen Raum. Sodann wird die Tragplatte 19 zusammen mit der zylinderförmigen Schutzwand 20 und dem Roboter 16 um die vertikale Achse 18 verschwenkt, so dass der offene Bereich 21 zum Arbeitsraum 11, d. h. zum ersten Arbeitsraum 11, offen ist und der Arm 22 in den Bereich des ersten Arbeitsraumes hineingeschwenkt werden kann, so dass auf dem dort befindlichen ersten Tisch 13 aufliegende Werkstücke oder Werkstückteile, die die Bedienperson P vorher ein- bzw. aufgelegt hat, bearbeitet werden können. Damit ist, wie in der ersten Stellung, der Arbeitsraum, hier der zweite Arbeitsraum 13, vom Roboter 16 getrennt, so dass die Bedienperson durch die zylinderförmige Schutzwand, d. h. durch den geschlossenen, diametral dem offenen Bereich 21 gegenüberliegenden Bereich geschützt ist. Dies kann dann von besonderem Vorteil sein, wenn der Roboter in dem Arbeitsraum 16 eine Laserschweissung durchführt. Eventuelle Auswirkungen auf den anderen Arbeitsraum, vor dem die Bedienperson steht, werden durch die zylindrische Schutzwand 20 vermieden.

Radial von den beiden im Bereich des Roboters 16 befindlichen Zellenwänden 10a und 10b ausgehend sind zur Schutzwand 20 hin vorspringende Stege 26 und 27 vorgesehen, die als zusätzlicher Schutz den Zwischenraum zwischen der Zellenwand bzw. den Zellenwänden 10a, 10b der beiden Arbeitsräume 11 und 12 voneinander trennen. Diese Stege 26, 27 können fest oder wegschwenkbar an den Zellenwänden angebracht sein.

Der im Ausführungsbeispiel verwendete Roboter ist ein sogenannter Industrieroboter, wie er durch eine DIN-Vorschrift beschrieben ist. Selbstverständlich können auch andere Roboterarten eingesetzt werden.

Darüber hinaus ist es auch selbstverständlich, dass die Arbeitstische 13 und 14 drehbar sind, beispielsweise um eine horizontale oder um eine vertikale Achse, wie dies beispielsweise bei der Ausführung gemäss Fig. 2 der DE 197 57 249 A1 der Fall ist.

## Patentansprüche

1. Roboteranlage mit einem Roboter, vorzugsweise einem Industrieroboter mit einer Schutzvorrichtung und mit wenigstens zwei je einen Arbeitstisch aufweisenden Arbeitsstationen, zwischen denen der Roboter angeordnet ist, so dass der Arbeitstisch in der einen Station von einer Bedienperson bestückbar ist, während der Roboter am Arbeitstisch in der anderen Station aktiv ist, wobei die Stationen in einem Zellengehäuse (10) dem Roboter (16) so zugeordnet sind, dass der Roboter an jeder Station Arbeiten verrichten kann, wobei mit der vertikalen Achse (18) des Roboters (16) eine zylinderförmige Schutzwandung (20) drehfest verbunden ist, die in einem Winkelbereich (21) offen ist, wobei sich der Roboter (16) innerhalb der Schutzwandung (20) befindet, wobei durch den offenen Bereich (21) der zylinderförmigen Schutzwandung (20) wenigstens der freie Roboterarm (22) herausfahr- oder schwenkbar ist, so dass durch die Schutzwandung die jeweilige Station, in der bestückt wird, vom Roboter (16) getrennt ist, wobei sich mit der Drehung der vertikalen Basis (17) des Roboters um seine vertikale Achse (18) auch die zylinderförmige Schutzwandung (20) verdreht,
**dadurch gekennzeichnet,**
**dass** der Innendurchmesser der Schutzwandung (20) so bemessen ist, dass der Roboter (16) vollständig in den Bereich des Innenraumes der Schutzwandung (20) einfahrbar ist.

2. Roboteranlage nach Anspruch 1, **dadurch gekennzeichnet, dass** bei zwei Stationen die Stationen nebeneinander angeordnet sind und den Roboter (16) zwischen sich nehmen.

3. Roboteranlage nach Anspruch 1, **dadurch gekennzeichnet, dass** bei zwei Stationen die Stationen im Winkel angeordnet sind.

4. Roboteranlage nach Anspruch 1, **dadurch gekennzeichnet, dass** bei mehr als zwei Stationen diese voll- oder halbkreisförmig um den Roboter herum gruppiert sind.

5. Roboteranlage nach Anspruch 1, **dadurch gekennzeichnet, dass** der Bereich zwischen den Arbeitsräumen im Zellengehäuse durch bezogen auf die Schutzwandung (20) radial von dem Zellengehäuse ausgehend bis zur Schutzwandung (20) hin vorspringende, vertikale Stege (26, 27) unterteilt ist, so dass auch die beiden Arbeitsräume ausserhalb der Schutzwandung (20) voneinander getrennt sind.

6. Roboteranlage nach Anspruch 5, **dadurch gekennzeichnet, dass** die Stege (26, 27) feststehend oder schwenkbar am Zellengehäuse angebracht sind.

## Claims

1. A robot installation having a robot, preferably an industrial robot, with a protective apparatus and with at least two workstations which each have a worktop and between which the robot is arranged, such that the worktop can be fitted with items by an operator at one station while the robot is active on the worktop at the other station, the stations being associated with the robot (16) in a cell housing (10) such that the robot can carry out work at each station, a cylindrical protective wall (20) being connected in a rotationally fixed manner to the vertical shaft (18) of the robot (16) and being open in an angle range (21), the robot (16) being located within the protective wall (20), it being possible for at least the free robot arm (22) to be moved or pivoted out through the open area (21) of the cylindrical protective wall (20), such that the respective station in which items are being fitted is separated from the robot (16) by the protective wall, with the cylindrical protective wall (20) also rotating with the rotation of the vertical base (17) of the robot about its vertical shaft (18),
**characterized**
**in that** the internal diameter of the protective wall (20) is designed such that the robot (16) can be moved completely into the area inside the protective wall (20) .

2. The robot installation according to claim 1, **characterized in that**, if there are two stations, the stations are arranged alongside one another and hold the robot (16) between them.

3. Robot installation according to claim 1, **characterized in that**, if there are two stations, the stations are arranged at an angle.

4. Robot installation according to claim 1, **characterized in that**, if there are more than two stations, these are grouped in the form of a circle or semicircle around the robot.

5. Robot installation according to claim 1, **characterized in that**, the area between the working areas in the cell housing is subdivided by vertical webs (26, 27), which project radially from the cell housing with respect to the protective wall (20) towards the protective wall (20), such that the two working areas outside the protective wall (20) are also separated from one another.

6. Robot installation according to claim 5, **characterized in that** the webs (26, 27) are fitted to the cell housing such that they are fixed or can pivot.

## Revendications

1. Installation robotisée comprenant un robot, de préférence un robot industriel, avec un dispositif de protection et avec au moins deux postes de travail comportant chacun une table de travail entre lesquels le robot est disposé de telle sorte que la table de travail dans l'un des postes puisse être équipée par un opérateur, alors que le robot est en action sur la table de travail dans l'autre poste, dans une enceinte à cellules (10), les postes étant associés au robot (16) de sorte que le robot puisse effectuer des travaux dans chaque poste, une paroi de protection (20) de forme cylindrique qui est ouverte dans une zone angulaire (21) étant assemblée de manière solidaire en rotation avec l'axe vertical (18) du robot (16), le robot (16) se trouvant à l'intérieur de la paroi de protection (20), à travers la zone ouverte (21) de la paroi cylindrique (20), au moins le bras libre (22) du robot pouvant sortir ou pivoter, de sorte que le poste de travail respectif, dans lequel s'effectue l'équipement soit séparé du robot (16) par la paroi de protection (20), sachant que la rotation de la base verticale (17) du robot autour de son axe vertical (18) entraîne également en rotation la paroi de protection (20) cylindrique,
**caractérisée en ce que**
le diamètre interne de la paroi de protection (20) est dimensionné de telle sorte que le robot (16) puisse rentrer entièrement dans la zone de l'espace interne de la paroi de protection (20).

2. Installation robotisée selon la revendication 1, **caractérisée en ce que** dans le cas de deux postes, ceux-ci sont disposés côte à côte et accueillent entre eux le robot (16).

3. Installation robotisée selon la revendication 1, **caractérisée en ce que** dans le cas de deux postes, les deux postes forment entre eux un angle.

4. Installation robotisée selon la revendication 1, **caractérisée en ce que** dans le cas de plus de deux postes, ceux-ci sont groupés autour du robot en formant un cercle complet ou un demi-cercle.

5. Installation robotisée selon la revendication 1, **caractérisée en ce que** la zone entre les espaces de travail dans l'enceinte à cellules est divisée par des barres verticales (26, 27) saillant de l'enceinte à cellules jusqu'à la paroi de protection (20), en partant en direction radiale par rapport à la paroi de séparation (20), de sorte que les deux espaces de travail soient séparés l'un de l'autre également à l'extérieur de la paroi de protection (20).

6. Installation robotisée selon la revendication 5, **caractérisée en ce que** les barres (26, 27) sont montées de manière fixe ou à pouvoir pivoter sur l'enceinte à cellules.
